# FASCICULE DE BREVET EUROPEEN

(11) **EP 0 563 356 B1**
(45) Date de publication et mention de la délivrance du brevet: **17.07.1996**
(21) Numéro de dépôt: 92921797.4
(22) Date de dépôt: 30.09.1992
(51) Int. Cl.: G01B 11/06

(54) **DISPOSITIF ET METHODE DE CONTROLE NON DESTRUCTIF ET CONTINU D'UNE VARIATION DE L'EPAISSEUR DE PROFILES**
VORRICHTUNG UND VERFAHREN ZUR KONTINUIERLICHEN ZERSTÖRUNGSFREIEN ÜBERWACHUNG DER DICKENÄDERUNG VON PROFILKÖRPERN
DEVICE AND METHOD FOR CONTINUOUSLY AND NON-DESTRUCTIVELY MONITORING VARIATION IN THE THICKNESS OF SHAPED SECTIONS

(30) Priorité: 21.10.1991 FR 9112989
(43) Date de publication de la demande: 06.10.1993
(73) Titulaire: INSTITUT FRANCAIS DU PETROLE, F-92506 Rueil-Malmaison (FR)
(72) Inventeur: MARTIN, Joseph, F-69100 Villeurbanne (FR)
(86) Numéro de dépôt international: FR9200922
(87) Numéro de publication internationale: WO9308446

(56) Documents cités:
- WO-A-81/03704
- DE-A- 4 003 407
- US-A- 3 535 522
- PATENT ABSTRACTS OF JAPAN vol. 15, no. 95 (P-1176)7 Mars 1991 & JP-A-2309205

## Description

La présente invention est relative à un dispositif et à une méthode de mesure et/ou de contrôle non destructif et continu de l'épaisseur d'un profilé.

De nombreuses techniques permettant la mesure et/ou le contrôle non destructif et continu de l'épaisseur d'un profilé ont été proposées dans le passé.

On a ainsi proposé l'utilisation d'une source produisant des ultrasons coopérant avec un détecteur, l'ensemble permettant d'effectuer le contrôle continu de l'épaisseur du profilé. Cette technique nécessite un contact entre le profilé et le détecteur ce qui n'est pas très favorable à un contrôle complet de toute la surface du profilé en raison de la faible surface de contact du récepteur par rapport à la surface à contrôler. Par ailleurs cette méthode est pratiquement inapplicable dans le cas d'un profilé comportant des ondulations.

On a également proposé des méthodes utilisant des rayonnements ionisants, en particulier des rayonnements β, mais dans ce cas le détecteur doit être à une distance fixe de la surface du profilé ce qui pose un problème technique difficilement soluble dans le cas des profilés comportant des ondulations. De plus, dans le cas de l'utilisation de rayonnements β, il est nécessaire de prévoir des moyens de protection contre les rayonnements ce qui complique beaucoup le procédé et sa mise en oeuvre.

Le document WO 81/03704 décrit un procédé pour examiner la surface d'un solide selon lequel une source infra-rouge pulsée est envoyée ponctuellement vers l'objet et le rayonnement résultant est analysé.

Par ailleurs le document JP 2 309 205 divulgue une façon de mesurer l'épaisseur d'une couche adhésive par mesure de la chaleur emmagasinée par cette couche.

La présente invention propose une méthode et un dispositif de mesure et/ou de contrôle non destructif et continu de l'épaisseur d'un profilé palliant les inconvénients des méthodes de l'art antérieur. En particulier la méthode et le dispositif selon l'invention s'applique aisément au cas des profilés ondulés quelle que soit la forme et l'amplitude des ondulations. La méthode de l'invention est basée sur la mesure du rayonnement émis par le profilé durant une phase de réchauffement ou une phase de refroidissement.

Sans vouloir être lié par une quelconque théorie, on peut estimer qu'un matériau de densité sensiblement homogène se refroidit, ou se réchauffe, d'autant plus rapidement que son épaisseur est faible. Ainsi en mesurant ou en observant, par exemple à l'aide d'une caméra infra-rouge, le rayonnement émis par le profilé au cours d'un régime transitoire thermique, c'est-à-dire au cours de son chauffage ou au cours de son refroidissement, il est possible d'observer ou de mesurer en continu des épaisseurs ou des variations d'épaisseur.

Il est habituellement admis qu'un matériau de densité sensiblement homogène émet un rayonnement, en particulier infra-rouge, dont la puissance est proportionnelle à la puissance quatrième de sa température de surface. Au cours d'un régime transitoire de température (refroidissement ou réchauffement), l'évolution de la température de surface dépend de l'épaisseur du profilé. Sur un profilé sensiblement uniformément refroidi, ou réchauffé, à chaque variation d'épaisseur correspondent des températures de surfaces différentes, donc des émissions de rayonnements, notamment infra-rouge de puissances différentes. Ce phénomène est plus marqué pour les matériaux ayant une faible conductivité thermique, et pour lesquels le refroidissement, ou le réchauffement est en général plus rapide que l'homogénéisation de la température au sein du matériau.

Ainsi, la présente invention permet notamment, mais non exclusivement, de réaliser un contrôle continu, non destructif, par caméra infra-rouge, de l'épaisseur de tubes ondulés thermoplastiques constituant par exemple le noyau de tubes ondulés armés.

Le dispositif, de mesure et/ou de contrôle non destructif et continu de l'épaisseur d'un profilé, selon la présente invention utilise ce phénomène physique.

Le dispositif selon l'invention comporte en combinaison :
a) au moins un moyen destiné à créer une variation continue de la température dudit profilé,
b) au moins un moyen de détection et de mesure du rayonnement émis par ledit profilé au cours de ladite variation de température,
c) un moyen d'enregistrement du rayonnement émis relié audit moyen de détection et de mesure, et
d) au moins un moyen permettant audit moyen de détection et de mesure du rayonnement émis de balayer toute la surface à contrôler du profilé.

Selon l'invention le moyen de détection et de mesure du rayonnement émis comprend une caméra infra-rouge reliée à un écran de visualisation et/ou à un système informatique comprenant un logiciel de traitement d'images.

Le système informatique comprendra de préférence un moyen de stockage des images fournies par la caméra infra-rouge et/ou des résultats fournis par le logiciel de traitement d'images.

Selon une forme préférée de réalisation de la présente invention le dispositif comprendra au moins un moyen permettant le défilement du profilé, par exemple des chenilles, et au moins un moyen permettant la synchronisation de ce défilement au mouvement de balayage du moyen de détection et de mesure du rayonnement émis, afin que toute la surface du profilé soit balayée par ledit moyen de détection et de mesure.

Le dispositif de la présente invention peut être utilisé pour la mesure et/ou le contrôle non destructif et continu de l'épaisseur d'un profilé lors de sa fabrication. Dans ce cas le moyen de chauffage du profilé est constitué par l'appareil de mise en forme dudit profilé. Cet appareil de mise en forme peut être par exemple une extrudeuse, une filière de machine à pultruder ou tout autre appareil bien connu de l'homme du métier.

Le dispositif de la présente invention peut être utilisé pour la mesure et/ou le contrôle non destructif et continu de l'épaisseur d'un profilé avant son utilisation par exemple au moment de sa fabrication, mais également après sa fabrication ou dans un site éloigné de son lieu de fabrication. Dans un tel cas le moyen de chauffage, ou de réchauffage dudit profilé est habituellement choisi dans le groupe formé par les résistances électriques, les fluides gazeux ou liquides chauds et les sources de chaleur par rayonnements (par exemple des rampes de lampes infra-rouge). Le réchauffement pourra par exemple être obtenu par circulation d'un fluide chaud, tel que par exemple de l'air, de l'eau, une huile minérale ou organique, autour dudit profilé ou dans le cas d'un profilé ayant la forme d'un tube, à l'intérieur de celui-ci.

Le profilé est le plus souvent chauffé de manière à ce que sa température soit d'au moins 50°C supèrieure à la température ambiante dans la zone se trouvant au niveau du moyen de détection et de mesure du rayonnement. La température maximale de chauffage dépend du ou des matériaux constitutifs dudit profilé ; elle est le plus souvent au plus égale à la température de formation du profilé, par exemple à la température d'extrusion du matériau thermoplastique utilisé qui est le plus souvent d'environ 160 à environ 280°C.

La position du moyen de détection et de mesure du rayonnement par rapport à celle du moyen de chauffage dépend à la fois du matériau constitutif du profilé, de la température à laquelle on le chauffe et de son épaisseur moyenne. Ce moyen de détection et de mesure est 5 de préférence positionné en un point où la température dudit profilé est d'environ 50°C à environ 140°C. La distance entre ce moyen et le profilé lui même n'est pas critique et peut être facilement choisie par l'homme du métier en fonction des caractéristiques de ce moyen de détection et de mesure, et notamment en fonction de sa sensibilité de détection.

Dans le cas d'un contrôle continu de l'épaisseur d'un profilé il est souvent souhaitable de prévoir au moins un moyen d'alarme se déclenchant automatiquement lorsque l'épaisseur du profilé est, au 5 moins en un point, en dehors d'un domaine d'épaisseur préalablement fixé. Un tel système d'alarme pourra par exemple être piloté par le système informatique dont le logiciel de traitement d'images peut permettre, après étalonnage, de convertir les températures mesurées en épaisseurs. Il est ainsi possible de fixer un ou plusieurs seuils ou niveaux d'alarmes. On pourra par exemple envisager de fixer un seuil d'alarme pour une épaisseur supérieure à une valeur préalablement choisie et un seuil d'alarme pour une épaisseur inférieure à une valeur préalablement choisie, ou ne choisir qu'un seul seuil d'alarme par exemple pour une épaisseur inférieure à une valeur préalablement choisie.

Le moyen permettant au moyen de détection et de mesure de balayer toute la surface du profilé peut comprendre un système de guidage tel que par exemple un rail sur lequel ledit moyen de détection et de mesure peut être fixé de manière à être mobile.

La présente invention a également pour objet une méthode de mesure et/ou de contrôle non destructif et continu de l'épaisseur d'un profilé caractérisée en ce qu'elle comporte en combinaison : la création d'une variation continue de la température dudit profilé jusqu'à une température suffisante pour que ledit profilé émette un rayonnement, la détection et la mesure, sur toute la surface dudit profilé, du rayonnement émis par ledit profilé, le balayage de toute la surface du profilé par le moyen de détection et de mesure du rayonnement et l'enregistrement du rayonnement émis par le profilé, sa variation et/ou son traitement à l'aide d'un système informatique comprenant un logiciel de traitement d'images.

Dans une forme préférée de réalisation ledit profilé est chauffé à une température telle qu'il émet un rayonnement infra-rouge ayant une longueur d'onde sensiblement comprise entre 2 et 25 micromètres et de préférence comprise entre 2 et 5 micromètres.

Dans une mise en oeuvre particulière, la méthode de l'invention comporte le défilement du profilé et l'enregistrement du rayonnement émis par balayage synchronisé de toute la surface du profilé par le détecteur de rayonnement.

Dans le cas d'un contrôle continu de l'épaisseur d'un profilé, il est souhaitable d'utiliser une alarme déclenchée automatiquement par le système informatique lorsque l'épaisseur mesurée du profilé est, au moins en un point, en dehors d'un domaine d'épaisseur préalablement fixé.

La méthode de contrôle et/ou de mesure selon la présente invention s'applique particulièrement bien au contrôle des profilés en matériaux thermoplastiques tels que ceux en polyéthylène (PE), en polypropylène (PP), en polyamide (PA), en polychlorure de vinyle (PVC), en polyfluorure de vinylidène (PVDF) et en polytéréphtalate de diols tels que l'éthylèneglycol ou le butanediol-1,4. Ces matériaux thermoplastiques peuvent être ou non renforcés par des fibres telles que par exemple des fibres de verre, de carbone, ou de polyamides aromatiques tels que par exemple le Kevlar (marque déposée). Ces matériaux présentent tous une conductivité thermique relativement faible et une forte émissivité notamment dans la gamme des longueurs d'ondes correspondant à l'infra-rouge.

La présente méthode peut être appliquée au contrôle et à la mesure de l'épaisseur de profilés plats ou tubulaires ayant une section sensiblement circulaire, ovale, elliptique, rectangulaire ou de toute autre forme définie par une courbe fermée. Elle est particulièrement bien adaptée au contrôle ou à la mesure de l'épaisseur de tubes ou de plaques ondulées. Les ondulations peuvent avoir une forme quelconque et une amplitude très variable. Ces ondulations sont par exemple des ondulations de section sinusoidale, carrée ou rectangulaire.

Les profilés ont habituellement une épaisseur moyenne d'environ 0,1 millimètre à environ 20 millimètres et le plus souvent d'environ 0,2 millimètre à environ 10 millimètres.

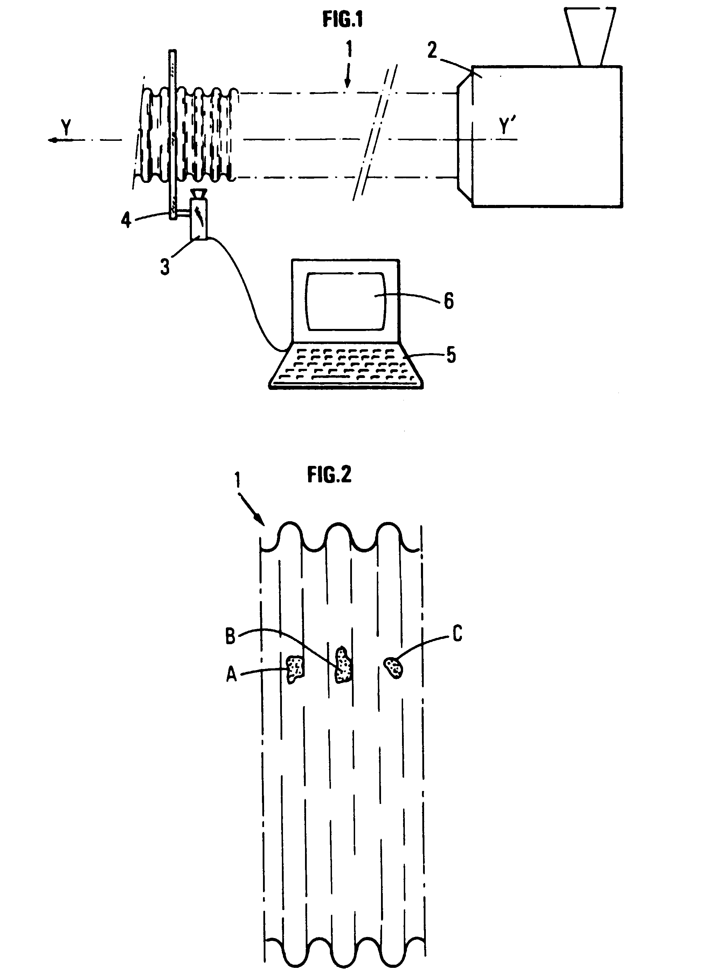

A titre d'exemple non limitatif, le dispositif de la présente invention est illustré schématiquement sur la figure 1 tandis que la figure 2 est une visualisation simplifiée d'un tube ondulé.

Le dispositif selon l'invention, représenté schématiquement sur la figure 1, comporte un appareil d'extrusion 2 permettant l'extrusion en continu d'un tube 1, par exemple de section sensiblement circulaire et présentant des ondulations de section sinusoïdale. Comme il a été dit ci-avant, le moyen de chauffage 2e st dans ce cas l'appareil d'extrusion lui-même.

Le tube se déplace selon son axe longitudinal YY', par exemple à vitesse sensiblement constante, et sa surface est balayée par une caméra infra-rouge 3 positionnée sur un chariot mobile se déplaçant simultanément sur un rail 4 perpendiculaire à l'axe YY' du tube. La caméra infra-rouge est reliée à un système informatique 5 comportant un écran de visualisation 6.

La figure 2 est une visualisation d'un contrôle d'épaisseur d'un tube en PVDF d'épaisseur moyenne égale à 1 millimètre. Le dispositif utilisé pour effectuer ce contrôle est celui schématisé sur la figure 1. La caméra infra-rouge utilisée peut être une caméra connue en soi, par exemple une caméra de la marque enregistrée THERMOVISION vendue par la société française AGEMA, cette caméra est refroidie à l'azote liquide, et possède une bande spectrale de 2 à 5 micromètres. Le système informatique associé peut être un système commercialisé par la société AGEMA, référencé TIC-8000, comprenant un ordinateur IBM PC-AT et un programme tel que CATS-E développé par la société AGEMA à des fins d'analyse thermique. L'impression d'écran reproduite sur la figure 2 est effectuée à l'aide d'une imprimante à jet d'encre connue en soi.

L'invention consiste donc à balayer toute la surface du profilé à examiner à l'aide d'une caméra infra-rouge 3, le profilé étant alors en transitoire thermique, c'est-à-dire soit en période de chauffage, soit en période de refroidissement, de toute façon en train d'émettre un rayonnement capable d'être détecté par ladite caméra.

Le système informatique associé à la caméra infra-rouge 3 comprend notamment un moyen d'enregistrement du rayonnement émis, un moyen de stockage des images fournies par la caméra, un moyen de traitement desdites images, un moyen de stockage des résultats fournis par le moyen de traitement des images.

Ainsi, selon l'invention, pour un profilé donné, chaque variation d'épaisseur se traduit par l'apparition d'une tache sur l'image du profilé visualisée à l'écran, tache correspondant à une variation de couleur ou à une variation de niveau de gris pour les écrans noir et blanc. Ainsi, la figure 2 montre une visualisation d'écran simplifiée selon laquelle on peut voir trois taches A, B, C correspondant respectivement à trois défauts.

Bien entendu, l'homme de métier sera en mesure d'imaginer toute adjonction et/ou modification ne sortant pas du cadre de l'invention, à partir du dispositif et de la méthode qui viennent d'être décrits à titre illustratif et nullement limitatif.

## Revendications

1. Dispositif de mesure et/ou de contrôle non destructif et continu d'une variation de l'épaisseur d'un profilé comportant en combinaison :
a) au moins un moyen (2) destiné à créer une variation continue de température (ou transitoire thermique) dudit profilé,
b) au moins un moyen (3) de détection et de mesure du rayonnement émis par ledit profilé au cours dudit transitoire thermique,
c) un moyen d'enregistrement du rayonnement émis relié audit moyen de détection et de mesure,
d) au moins un moyen (4) permettant audit moyen de détection et de mesure du rayonnement émis de balayer toute la surface du profilé,
caractérisé en ce que le moyen de détection et de mesure du rayonnement émis comprend une caméra infra-rouge (3) reliée à un écran de visualisation (6) et/ou à un système informatique comprenant un logiciel de traitement d'images.

2. Dispositif selon la revendication 1 dans lequel le système informatique comprend un moyen de stockage des images fournies par la caméra infra-rouge et/ou des résultats fournis par le logiciel de traitement d'images.

3. Dispositif selon l'une quelconque des revendications 1 ou 2, caractérisé en ce qu'il comporte en outre au moins un moyen permettant le défilement du profilé et au moins un moyen permettant la synchronisation de ce défilement au mouvement de balayage du moyen de détection et de mesure du rayonnement émis.

4. Dispositif selon l'une quelconque des revendications 1 à 3 dans lequel le moyen destiné à créer une variation de température du profilé est un moyen de chauffage constitué par un appareil (2) de mise en forme dudit profilé.

5. Dispositif selon l'une quelconque des revendications 1 à 4 dans lequel le moyen de chauffage du profilé est choisi dans le groupe formé par les résistances électriques, les fluides gazeux ou liquides chauds et les sources de chaleur par rayonnements.

6. Dispositif selon l'une quelconque des revendications 1 à 5, caractérisé en ce qu'il comporte en outre au moins un moyen d'alarme se déclenchant automatiquement lorsque l'épaisseur mesurée du profilé est, au moins en un point, en dehors d'un domaine d'épaisseur préalablement fixé.

7. Méthode de mesure et/ou de contrôle non destructif et continu d'une variation de l'épaisseur d'un profilé caractérisée en ce qu'elle comporte en combinaison :
- la création d'une variation continue de la température dudit profilé jusqu'à une température suffisante pour que ledit profilé émette un rayonnement et
- la détection et la mesure, sur toute la surface dudit profilé, du rayonnement émis par ledit profilé,
- le balayage de toute la surface du profilé par le moyen de détection et de mesure audit rayonnement.
- l'enregistrement du rayonnement émis par le profilé, sa visualisation et/ou son traitement à l'aide d'un système informatique comprenant un logiciel de traitement d'images.

8. Méthode selon la revendication 7, caractérisé en ce que ledit profilé est chauffé à une température telle qu'il émet un rayonnement infra-rouge ayant une longueur d'onde sensiblement comprise entre 2 et 25 micromètres, de préférence entre 2 et 5 micromètres.

9. Méthode selon l'une quelconque des revendications 7 ou 8 comportant le défilement du profilé et l'enregistrement du rayonnement émis par balayage synchronisé de toute la surface du profilé par un détecteur de rayonnement.

10. Méthode selon l'une quelconque des revendications 7 à 9 caractérisé en ce qu'une alarme est mise en route automatiquement par le système informatique lorsque l'épaisseur mesurée du profilé est, au moins en un point, en dehors d'un domaine d'épaisseur préalablement fixé.

## Patentansprüche

1. Vorrichtung zur zerstörungsfreien und kontinuierlichen Messung und/oder Regelung einer Dickenveränderung eines Profils, in Kombination umfassend:
a) wenigstens ein Mittel (2), das dazu bestimmt ist, eine kontinuierliche Temperaturänderung (oder einen thermischen Übergang) dieses Profils zu erzeugen,
b) wenigstens ein Mittel (3) zur Erfassung und Messung der durch dieses Profil während dieses thermischen Übergangs ausgesandten Strahlung,
c) ein Mittel zur Aufzeichnung der ausgesandten Strahlung, in Verbindung mit diesem Erfassungs- und Meßmittel,
d) wenigstens ein Mittel (4), das es diesem Erfassungs- und Meßmittel für die ausgesandte Strahlung ermöglicht, die gesamte Oberfläche des Profils zu überstreichen,
dadurch gekennzeichnet, daß das Erfassungs- und Meßmittel für die ausgesandte Strahlung eine Infrarotkamera (3) umfaßt, die mit einem Sichtbarmachungsschirm (6) und/oder einem Informatiksystem, das Bildverarbeitungssoftware umfaßt, verbunden ist.

2. Vorrichtung nach Anspruch 1, bei dem das Informatiksystem ein Speichermittel der durch die Infrarotkamera gelieferten Bilder und/oder der Ergebnisse umfaßt, die durch die Bildverarbeitungssoftware geliefert wurden.

3. Vorrichtung nach einem der Ansprüche 1 oder 2, dadurch gekennzeichnet, daß sie im übrigen wenigstens ein Mittel, das den Durchlauf des Profils ermöglicht, und wenigstens ein Mittel, das die Synchronisation dieses Durchlaufs mit der Überstreich-bewegung des Erfassungs- und Meßmittels für die ausgesandte Strahlung erlaubt, umfaßt.

4. Vorrichtung nach einem der Ansprüche 1 bis 3, bei dem dieses Mittel, das dazu bestimmt ist, eine Temperaturänderung des Profils zu erzeugen, ein Heizmittel ist, das durch eine Vorrichtung (2) zur Formgebung dieses Profils gebildet ist.

5. Vorrichtung nach einem der Ansprüche 1 bis 4, bei dem das Heizmittel für das Profil gewählt ist aus der Gruppe, die gebildet ist durch die elektrischen Widerstände, die gasförmigen oder flüssigen heißen Fluide sowie die Strahlungswärmequellen.

6. Vorrichtung nach einem der Ansprüche 1 bis 5, dadurch gekennzeichnet, daß sie im übrigen wenigstens ein Alarmmittel umfaßt, das automatisch auslöst, wenn die gemessene Dicke des Profils wenigstens an einer Stelle sich außerhalb eines vorher festgelegten Dickenbereichs befindet.

7. Verfahren zur zerstörungsfreien und kontinuierlichen Messung und/oder Überwachung bzw. Regelung einer Dickenveränderung eines Profils, dadurch gekennzeichnet, daß es in Kombination umfaßt:
- die Erzeugung einer kontinuierlichen Veränderung der Temperatur dieses Profils bis auf eine ausreichende Temperatur, damit dieses Profil eine Strahlung aussendet und
- die Erfassung und Messung über die gesamte Oberfläche dieses Profils der durch dieses Profil ausgesandten Strahlung,
- das Überstreichen der gesamten Oberfläche des Profils durch das Erfassungs- und Meßmittel für diese Strahlung und
- die Aufzeichnung der durch dieses Profil ausgesandten Strahlung, seine Sichtbarmachung und/oder seine Verarbeitung mit Hilfe eines Informatiksystems, das eine Bildverarbeitungssoftware umfaßt.

8. Verfahren nach Anspruch 7, dadurch gekennzeichnet, daß dieses Profil auf eine Temperatur derart erwärmt wird, daß es eine Infrarotstrahlung mit einer Wellenlänge aussendet, die im wesentlichen zwischen 2 und 25 Mikrometer, bevorzugt zwischen 2 und 5 Mikrometer, umfaßt.

9. Verfahren nach einem der Ansprüche 7 oder 8, den Durchlauf oder den Vorbeilauf des Profils und die Aufzeichnung der Strahlung umfassend, die durch synchronisiertes Überstreichen der gesamten Oberfläche des Profils durch einen Strahlungsdetektor ausgesandt wurde.

10. Verfahren nach einem der Ansprüche 7 bis 9, dadurch gekennzeichnet, daß ein Alarm automatisch durch das Informatiksystem in Gang gesetzt wird, wenn die gemessene Dicke des Profils, wenigstens an einer Stelle, außerhalb eines vorher festgelegten Dickenbereichs sich befindet.

## Claims

1. Device for measuring and/or monitoring, non-destructively and continuously, a variation in the thickness of a profiled section comprising in combination:
a) at least one means (2) designed to create a continuous variation in the temperature (thermal transition) of the said section,
b) at least one means for detecting and measuring the radiation emitted by the said section during the said thermal transition,
c) a means for recording the emitted radiation, connected to the said detection and measuring means,
d) at least one means (4) enabling the said means for detecting and measuring the emitted radiation to scan the entire surface of the section,
characterised in that the means for detecting and measuring the radiation emitted is an infra-red camera (3) connected to a display screen (6) and/or a computer system having an image processing programme.

2. Device as claimed in claim 1, in which the computer system has a means for storing the images supplied by the infra-red camera and/or the results supplied by the image processing software.

3. Device as claimed in any one of claims 1 or 2, characterised in that it has in addition at least one means allowing the section to be moved forward and at least one means enabling this forward movement to be synchronised with the scanning movement of the means for detecting and measuring the emitted radiation.

4. Device as claimed in any one of claims 1 to 3 in which the means designed to create a variation in the temperature of the said section is a heating means as provided by a machine (2) used to form the said section.

5. Device as claimed in any one of claims 1 to 4, in which the means for heating the section is selected from among the group comprising electrical resistors, warm gaseous fluids or liquids and radiation-based heat sources.

6. Device as claimed in any one of claims 1 to 5, characterised in that it has in addition at least one alarm means that is automatically triggered when the measured thickness of the section is, at least at one point, outside a predetermined thickness range.

7. Method for measuring and/or monitoring, non-destructively and continuously, a variation in the thickness of a section, characterised in that it consists in combination in :
- creating a continuous variation in the temperature of the said section to a temperature sufficient to enable the said section to emit radiation and
- detecting and measuring, over the entire surface of the said section, the radiation emitted by the said section,
- scanning for radiation the entire surface of the section using the detection and measuring means,
- recording the radiation emitted by the section, displaying it and/or processing it by means of a computer system having an image processing programme.

8. Method as claimed in claim 7, characterised in that the said section is heated to a temperature at which it emits infra-red radiation of a wavelength substantially within the range between 2 and 25 micrometres and preferably between 2 and 5 micrometres.

9. Method as claimed in any one of claims 7 or 8 consisting in moving the section forward and recording the radiation emitted by scanning in synchronisation the entire surface of the section using a radiation detector.

10. Method as claimed in any one of claims 7 to 9, characterised in that an alarm is automatically activated by the computer system when the measured thickness of the section is, at least at one point, outside a predetermined range of thickness.
